(19) Europäisches Patentamt
European Patent Office
Office européen des brevets

(11) **EP 2 946 945 B1**

(12) **EUROPEAN PATENT SPECIFICATION**

(45) Date of publication and mention
of the grant of the patent:
**13.09.2017 Bulletin 2017/37**

(51) Int Cl.:
*B60C 11/00* (2006.01)    *B60C 5/00* (2006.01)
*B60C 11/13* (2006.01)    *B60C 11/04* (2006.01)
*B60C 11/12* (2006.01)    *B60C 11/11* (2006.01)
*B60C 11/14* (2006.01)    *B60C 11/03* (2006.01)

(21) Application number: **13868326.3**

(22) Date of filing: **27.12.2013**

(86) International application number:
**PCT/JP2013/085208**

(87) International publication number:
**WO 2014/104339 (03.07.2014 Gazette 2014/27)**

(54) **TREAD FOR PNEUMATIC TIRE AND PNEUMATIC TIRE HAVING SAID TREAD**

LAUFFLÄCHE FÜR LUFTREIFEN UND LUFTREIFEN DAMIT

BANDE DE ROULEMENT POUR PNEU ET PNEU COMPORTANT LADITE BANDE DE ROULEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2012 PCT/JP2012/084162**

(43) Date of publication of application:
**25.11.2015 Bulletin 2015/48**

(73) Proprietor: **Compagnie Générale des
Etablissements Michelin
63000 Clermont-Ferrand (FR)**

(72) Inventor: **KANEKO, Shuichi
Tokyo 163-1073 (JP)**

(74) Representative: **Regimbeau
20, rue de Chazelles
75847 Paris Cedex 17 (FR)**

(56) References cited:
**JP-A- H 061 117      JP-A- H1 191 318
JP-A- H02 249 707    JP-A- H07 112 603
JP-A- H09 193 618    JP-A- S62 268 708
JP-U- H0 737 709**

**Description**

[Technical Field]

The present invention relates to a pneumatic tyre tread and to a pneumatic tyre having said tread, and in particular the present invention relates to a pneumatic tyre tread having improved performance on snow and performance on ice by virtue of a reinforcing part provided on the frontal side wall of a block, and to a pneumatic tyre having said tread.

[Prior Art]

Winter tyres which are also called "studless" tyres are well known as tyres which can travel on winter road surfaces covered with snow or ice. Winter tyres are generally provided with a plurality of narrow incisions known as sipes which open at the contact surface, and adhesion to a road surface in winter is improved by means of what is known as an "edge" effect and a water film-removal effect, and also by using a compound which is softer than that used for tyres which are not for winter use.

The mechanism by which frictional force is generated with the road surface in a winter tyre actually differs depending on whether the road surface is snowy or icy, so it is known that even if a soft compound is used and a large number of narrow incisions are provided in blocks which are the ground-contact elements in order to improve performance on ice, there will be a reduction in block rigidity as a result, and this will hinder any improvement in the performance on snow.

It is known that the introduction of reinforcing parts onto the side walls of blocks is effective as a means for achieving good performance on ice and good performance on snow at the same time.

For example, Patent Document 1 (mainly fig. 3) describes a pneumatic tyre in which a balance between performance on snow and performance on ice is achieved by providing reinforcing parts employing a rubber having a JIS A hardness of 80 to 95 degrees on block side walls facing a transverse groove and an auxiliary transverse groove, in a block provided with three narrow incisions and one auxiliary groove.

Furthermore, Patent Document 2 (mainly fig. 2) describes technology in which a balance between performance on snow and performance on ice is achieved by using a composition in which at least 50 parts by weight of carbon black and/or silica are combined with 100 parts by weight of a diene rubber containing 30 wt% or more of a rubber component having a glass transition temperature of -60°C or more, and by providing reinforcing parts employing rubber having a brittleness temperature of -30°C or less on the side walls of the blocks.

Furthermore, Patent Document 3 (mainly fig. 1), which is a prior application, describes a pneumatic tyre tread which achieves a balance between performance on snow and performance on ice by virtue of the fact that reinforcing layers (reinforcing parts) having a material modulus (elastic modulus) of 200 MPa or greater are provided to a thickness of less than 0.5 mm over a region of at least 50% of the block side walls.

As a means for simultaneously achieving good performance on ice and performance on snow, Patent Document 4 (mainly fig. 3) describes a pneumatic tyre which achieves a balance between performance on snow and performance on ice by virtue of the fact that blocks are inclined in the direction of rotation. Such an inclination of blocks is also known from Patent Document 5.

[Prior Art Documents]

[Patent Documents]

     [Patent Document 1] JP 7-047814 A
     [Patent Document 2] JP 2010-105509 A
     [Patent Document 3] PCT/JP2011/079188 (WO 2013/088570 pamphlet)
     [Patent Document 4] JP 2009-292229 A
     [Patent Document 5] JP 62-268708

[Summary of the Invention]

[Problem to be Solved by the Invention]

However, it is difficult to achieve a high-level balance between performance on snow and performance on ice with the pneumatic tyres described in Patent Documents 1, 2, 3 and 4, and improvement in the performance on snow in particular is inadequate, and there is a need for a pneumatic tyre which can achieve a higher-level balance between performance on snow and performance on ice from the point of view of safety of travel on winter road surfaces.

The present invention is intended to solve the problems of the prior art described above, and the aim thereof lies in providing a pneumatic tyre tread provided with a reinforcing part on the side wall of a block, which can achieve a higher-level balance between performance on snow and performance on ice, and also in providing a pneumatic tyre having such a tread.

[Means for Solving the Problem]

In order to achieve the abovementioned aim, the present invention provides a pneumatic tyre tread formed by means of at least one rubber composition, characterized in that: the at least one rubber composition has an elastic modulus Et; the tread comprises: at least one circumferential main groove, a plurality of auxiliary grooves, and a plurality of blocks which are defined by the circumferential main groove and the auxiliary grooves; at least one of the blocks from among the plurality of blocks comprises: an upper surface constituting a contact surface at least partly in contact with a road surface when the tyre is rolling, two frontal side walls positioned along the tyre circumferential direction, and two lateral side walls positioned along the tyre axial direction; the upper surface of the block has two frontal edges formed at positions intersecting the two frontal side walls; the block has a reinforcing part provided on at least one of the two frontal side walls, the block has a reinforcing part provided on at least one of the two frontal side walls; the reinforcing part is formed by means of a material having an elastic modulus Ef, and the elastic modulus Ef of the reinforcing part and the elastic modulus Et of the rubber composition have values obtained from the tensile test defined in the standard ASTM D882-09, and the elastic modulus Ef of the reinforcing part is at least 20 times greater than the elastic modulus Et of the rubber composition; the reinforcing part of the block has a mean thickness of between 0.1 mm and 2.0 mm, and is provided in such a way as to face at least the auxiliary groove over a region of at least 70% of the frontal side wall; and the two frontal side walls are formed in such a way that the angles thereof with respect to the upper surface form angles T1 and T2, respectively, the angles T1 and T2 both being less than 90°.

Here, "groove" refers to a space having a width and a depth which is constructed by connecting two opposing surfaces (wall surfaces, side walls) which do not come into contact with each other under normal usage conditions, by means of another surface (bottom surface).

Furthermore, "main groove" refers to a groove which is mainly responsible for fluid drainage and has a relatively large width among the various types of grooves formed in the tread. In many cases, "main groove" means a groove extending in a linear, zigzag or undulating manner in the tyre circumferential direction, but a groove having a relatively large width which is mainly responsible for fluid drainage and extends at an angle with respect to the direction of rotation of the tyre is also included.

Furthermore, grooves other than the "main groove" are referred to as "auxiliary grooves".

Furthermore, "edge" refers to the intersection between the upper surface of a block and the frontal side wall or lateral side wall (the edge parts on the upper surface of the block or the boundary on the upper surface of the block with the frontal side wall or lateral side wall). The upper surface of the block which forms part of the contact surface is defined by edges such as these. If a bevel is formed between the upper surface and the frontal side wall or lateral side wall, the bevelled part is understood as being part of the upper surface. The intersection between the upper surface of the block and the frontal side wall in the direction of rotation is referred to as the "frontal edge".

Furthermore, "elastic modulus" refers to the elastic modulus in tension E calculated from a tensile test curve obtained from the tensile test defined in the standard ASTM D882-09. That is to say, the elastic modulus Et of the rubber composition and the elastic modulus Ef of the reinforcing part are calculated from a tensile test curve obtained from the tensile test defined in the standard ASTM D882-09. The elastic modulus in tension E has the following relationship with the elastic shear modulus G, as described in "POLYMER PHYSICS" (Oxford, ISBN 978-0-19-852059-7, Chapter 7.7, Page 296), for example.

$$E = 2G(1+v)$$

Here, $v$ is Poisson's ratio, the Poisson's ratio of rubber material being a value very close to 0.5.

Moreover, when it is being confirmed that the elastic modulus Ef of the material forming the reinforcing part is at least 20 times greater than the elastic modulus Et of the rubber composition forming the tread, this confirmation can also be made by substituting the abovementioned elastic modulus Et and elastic modulus Ef with the complex elastic modulus (dynamic shear modulus: G* of the material) M. The storage elastic modulus represented by G' and the loss elastic modulus represented by G", which are known dynamic properties, are measured by means of a viscosity analyser (viscoanalyser: Metravib VB4000) using a test piece moulded from the raw composition or a test piece which is combined with the composition after vulcanization. The test piece which is used is described in Figure X2.1 (a circular method) of the standard ASTM D 5992-96 (version published September 2006, initially approved in 1996). The diameter "d" of the test piece is 10 mm (consequently the test piece has a circular cross section of 78.5 mm$^2$), the thickness "L" of each part of the rubber compound is 2 mm, and the ratio "d/L" (described in paragraph X2.4 of the ASTM standard, unlike the ratio "d/L" of 2 recommended in the standard ISO 2856) is 5. In the test, the response of a test piece comprising a vulcanized rubber composition subjected to a simple alternating sinusoidal shear load is measured at a frequency of 10 Hz. The maximum shear stress applied during the test is 0.7 MPa. The measurement is taken by varying the temperature from Tmin, which is a temperature lower than the glass transition temperature (Tg) of the rubber material, to a maximum temperature Tmax in the vicinity of 100°C, at a rate of 1.5°C per minute. The test piece is stabilized for approximately 20 minutes at Tmin prior to the start of the test in order to obtain a satisfactory uniformity of temperature within the test piece. The results obtained are the storage elastic modulus (G') and the loss elastic modulus (G") at the prescribed temperature. The complex elastic modulus G* is defined in terms of the absolute values of the storage elastic modulus and the loss elastic modulus using the following formula:

$$G* = \sqrt{G'^2 + G''^2}$$

According to the present invention having the configuration described above, the angles T1, T2 formed by the frontal side walls and the upper surface are both less than 90°, so when the tyre is travelling on a road surface for which the coefficient of friction is sufficient to cause deformation of the ground-contact elements, such as a snowy road surface, it is possible to prevent buckling deformation of the blocks by virtue of the effect of the reinforcing part provided over a region of 70% or more of at least one frontal side wall, and as a result it is possible to achieve locally high edge pressure. This makes it possible for the frontal edge to bite effectively into the snow, and as a result it is possible to improve the performance on snow.

In addition, according to the present invention, the angles T1, T2 formed by the frontal side walls and the upper surface are both less than 90°, so when the tyre is travelling on a road surface for which the coefficient of friction is insufficient to cause deformation of the ground-contact elements, such as an icy road surface, a moment force in a direction producing a reduction in the ground-contact pressure can be generated in the vicinity of the frontal edge part of the block. Accordingly, it is possible to prevent the formation of a water film between the tread and the ice, which is well known as a cause of reducing the friction coefficient on ice, and as a result it is possible to improve the performance on ice.

According to the present invention, the angles T1 and T2 are both preferably 85° or less.

According to the present invention, the angles T1 and T2 are both preferably 60° or greater.

According to the present invention having the configuration described above, it is possible to ensure that the blocks are sufficiently rigid to exhibit various aspects of performance required of a tyre.

According to the present invention, the angles T1 and T2 are both more preferably 70° or greater.

According to the present invention, T1 and T2 are preferably angles which are different from each other.

According to the present invention, the angle T2 is preferably greater than the angle T1.

According to the present invention having the configuration described above, when the tyre is rolling, the frontal edge on the side of the angle T2, which is a relatively larger angle, makes it possible to reduce the moment force in a direction producing a reduction in the contact surface area of the block generated in the vicinity of the frontal edge on the trailing side, especially when said frontal edge lies on the trailing side, so it is possible to effectively increase the contact surface area of the block. As a result, it is possible to improve the performance on ice.

Here, the "leading-side frontal edge" refers to the frontal edge on the side of the direction of rotation of the tyre as it rolls, while on the other hand, the "trailing-side frontal edge" refers to the frontal edge on the opposite side in the direction of rotation of the tyre as it rolls.

According to the present invention, the angles T1 and T2 preferably satisfy the following relationship:

$$T_2 \geq T_1 + 5° .$$

According to the present invention having the configuration described above, it is possible to more effectively achieve a balance between performance on ice and performance on snow.

According to the present invention, the angle T1 is preferably 80° or less.

According to the present invention having the configuration described above, when the tyre is travelling on a road surface for which the coefficient of friction is sufficient to cause deformation of the ground-contact elements, such as a snowy road surface, the performance on snow is improved as a result of the fact that a high edge pressure for causing the frontal edge to bite sufficiently into the snow is produced especially if the frontal edge on the angle T1 side is the leading-side frontal edge, and when the tyre is travelling on a road surface for which the coefficient of friction is insufficient to cause deformation of the ground-contact elements, such as an icy road surface, then it is possible to improve the performance on ice by preventing generation of excessively high ground-contact pressure at the frontal edge.

According to the present invention, the angle T2 is preferably between 75° and 85°.

According to the present invention having the configuration described above, when the tyre is rolling it is possible to reduce the moment force in a direction producing a reduction in the contact surface area of the block generated in the vicinity of the trailing-side frontal edge, especially if the frontal edge on the angle T2 side is the trailing-side frontal edge, so it is possible to increase the contact surface area of the block and as a result the performance on ice can be improved and an improvement in the performance on snow can also be envisaged.

According to the present invention, the reinforcing part provided on the frontal side wall is preferably provided in such a way as to extend at least partly in the width direction of the frontal edge.

According to the present invention having the configuration described above, it is possible to more reliably produce a high edge pressure at the frontal edge part when the tyre is travelling on a road surface for which the coefficient of friction is sufficient to cause deformation of the ground-contact elements, such as a snowy road surface, which means that the frontal edge can be made to bite more reliably into the snow, and as a result it is possible to further improve the performance on snow.

According to the present invention, the reinforcing part is preferably provided over a region of at least equal to 90% of the at least one frontal side wall.

According to the present invention having the configuration described above, it is possible to more reliably produce a high edge pressure at the frontal edge part when the tyre is travelling on a road surface for which the coefficient of friction is sufficient to cause deformation of the ground-contact elements, such as a snowy road surface, which means that the frontal edge can be made to bite more reliably into the snow. As a result it is possible to further improve the performance on snow.

According to the present invention, the reinforcing part is more preferably provided over the whole region of the at least one frontal side wall, and even more preferably the reinforcing part is provided over the whole region of the two frontal side walls.

According to the present invention having the configuration described above, it is possible to more reliably improve the performance on snow.

[Advantage of the Invention]

The pneumatic tyre tread and pneumatic tyre having such a tread according to the present invention make it possible to achieve a higher-level balance between performance on snow and performance on ice.

[Brief Description of the Figures]

[Fig. 1] is a perspective view schematically showing a pneumatic tyre tread according to a first mode of embodiment of the present invention;

[Fig. 2] is an enlargement in cross section of the block of the pneumatic tyre tread seen along the line II-II in fig. 1;

[Fig. 3] is a perspective view schematically showing a pneumatic tyre tread according to a second mode of embodiment of the present invention;

[Fig. 4] is an enlargement in cross section of the block of the pneumatic tyre tread seen along the line IV-IV in fig. 3; and

[Fig. 5] is an enlargement in cross section of the block of a conventional pneumatic tyre tread.

[Mode of Embodiment of the Invention]

The pneumatic tyre tread and pneumatic tyre employing said tread according to preferred modes of embodiment of the present invention will be described below with reference to the appended figures.

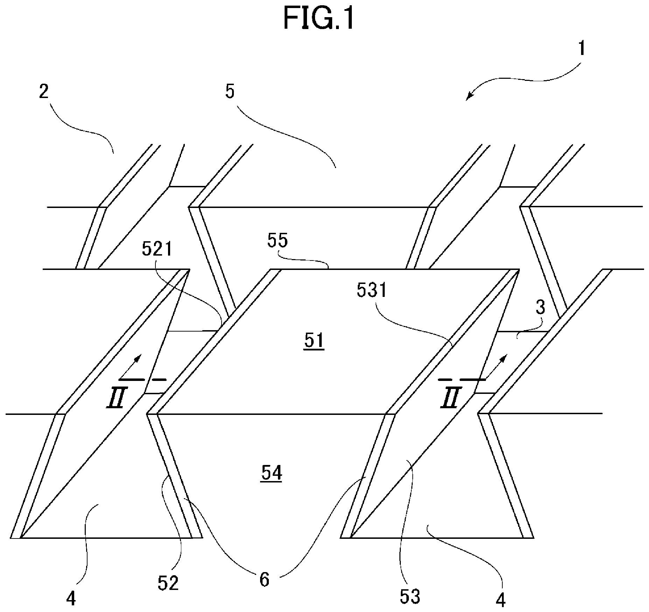

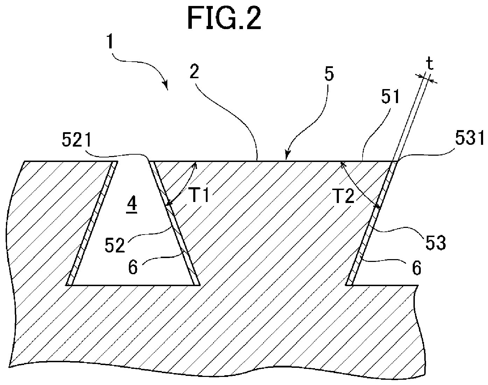

The pneumatic tyre tread according to a first mode of embodiment of the present invention will be described first of all with the aid of fig. 1 and fig. 2. Fig. 1 is a perspective view schematically showing the pneumatic tyre tread according to the first mode of embodiment of the present invention, and fig. 2 is an enlargement in cross section of the block of the pneumatic tyre tread seen along the line II-II in fig. 1.

First of all, as shown in fig. 1, the reference symbol 1 is a pneumatic tyre tread according to the first mode of embodiment of the present invention. It should be noted that the size of the pneumatic tyre to which the pneumatic tyre tread 1 is applied in this example is 205/55R16.

The overall structure of the tread 1 will be described next with the aid of fig. 1 and fig. 2.

The tread 1, which comprises a rubber composition having an elastic modulus Et, has a contact surface 2 which comes into contact with the road surface when the tyre is rolling, and two circumferential main grooves 3 and a plurality of auxiliary grooves 4 are formed therein. A plurality of blocks 5 are defined by the circumferential main grooves 3 and auxiliary grooves 4.

The blocks 5 comprise: an upper surface 51 forming part of the contact surface 2; two side walls (frontal side walls) 52, 53 which are positioned longitudinally along the tyre circumferential direction and are formed in such a way as to face the auxiliary grooves 4; and two side walls (lateral side walls) 54, 55 which are positioned transversely along the direction of the tyre axis of rotation and are formed in such a way as to face the circumferential grooves 3.

Frontal edges 521, 531 are formed on the upper surface 51 at edge parts intersecting the frontal side walls 52, 53.

Next, a reinforcing part 6 comprising a material having an elastic modulus Ef which is at least 20 times greater, and preferably at least 50 times greater than the elastic modulus Et of the rubber composition forming the tread 1 is provided on the two frontal side walls 52, 53. In this mode of embodiment, the elastic modulus Et of the rubber composition forming the tread 1 is 5.4 MPa. The elastic modulus Et is preferably between 1.5 MPa and 15 MPa. Furthermore, in this mode of embodiment, the elastic modulus Ef of the material forming the reinforcing part 6 is 270 MPa. This means that the elastic modulus Ef of the rubber composition forming the tread 1 is formed in such a way as to be 50 times greater than the elastic modulus Et of the material forming the reinforcing part 6.

Here, the elastic modulus Et of the rubber composition forming the tread 1 and the elastic modulus Ef of the material forming the reinforcing part 6 can be calculated from a tensile test curve obtained from the tensile test defined in the standard ASTM D882-09.

The arrangement of the reinforcing parts 6 on the blocks 5 of the tread 1 will be described next.

According to this mode of embodiment, the reinforcing parts 6 are provided in such a way as to face the auxiliary grooves 4 over at least equal to 70% of the region of the frontal side walls 52, 53, and preferably over the whole region of the frontal side walls 52, 53. Furthermore, the reinforcing parts 6 are provided in such a way that the mean thickness t thereof (shown in fig. 2) is less than 2.0 mm and preferably less than 1.0 mm. Here, the thickness (t) of the reinforcing parts 6 constitutes the thickness in a direction perpendicular to the surface of the frontal side walls 52, 53 on which the reinforcing parts 6 are provided facing the auxiliary grooves 4, and the "mean thickness" of the reinforcing parts 6 is the mean value of the reinforcing parts 6 measured from the bottom surface side of the auxiliary grooves 4 to the upper surface 51 side of the blocks 5, in other words the mean value over essentially the whole surface of the reinforcing parts 6. According to this mode of embodiment, the reinforcing parts 6 are provided over the whole region (100%) of the frontal edges 521, 531 and the frontal side walls 52, 53, and the mean thickness t is 0.5 mm. Here, the mean thickness t of the reinforcing parts 6 is preferably at least equal to 0.2 mm.

The upper surface 51 of the blocks 5 of the tread 1 will be described next.

The upper surface 51 forms part of the contact surface 2 of the tread 1 which comes into contact with the road surface when the tyre is rolling, the upper surface 51 being defined as the region of the block 5 which can partly come into contact with the road surface under specific conditions. The upper surface 51 comprises two circumferential edges (frontal edges) 521, 531 in the tyre circumferential direction, and that region of the upper surface 51 is bound by the circumferential edges 521, 531. In other words, the upper surface 51 comprises the two circumferential edges 521, 531 at each edge on the tyre circumferential direction side.

The dimensional relationship of the reinforcing part 6 of the blocks 5 of the tread 1 and the frontal side walls 52, 53 on which the reinforcing part 6 is provided will be described next.

According to this mode of embodiment, the frontal side walls 52, 53 on which the reinforcing part 6 is provided are formed in such a way that the distance between the position on the outermost side of the reinforcing part 6 measured in the radial direction (the edge part on the outside in the radial direction of the reinforcing part 6) and the frontal edges 521, 531 is less than or equal to 2.0 mm. The reinforcing part 6 is preferably formed in such a way as to at least partly include the frontal edges 521, 531, and more preferably in such a way as to include the whole of the frontal edges 521, 531.

In the example shown in fig. 2, the distance between the position on the outermost side of the reinforcing part 6 in the radial direction and the frontal edges 521, 531 is zero (0 mm), and the edge parts on the outermost side in the radial direction of the reinforcing part 6 provided on the frontal side walls 52, 53 are provided in such a way as to be present over the whole of the frontal edges 521, 531 in the width direction. On the other hand, the edge parts on the outermost side in the radial direction of the reinforcing part 6 provided on the frontal side walls 52, 53 may be provided in such a way as to be at least partly present on the frontal edges 521, 531 in the width direction of the frontal edges 521, 531.

Furthermore, the reinforcing part 6 is provided only in a partial region of the frontal side walls 52, 53 on the block 5 (this partial region constitutes at least equal to 70% of the region of the frontal side walls 52, 53, as described above), but the reinforcing part 6 is preferably present over the whole region of the frontal side walls 52, 53 in order to maximize the advantage thereof. This kind of reinforcing part 6 would of course be provided in such a way as to include the whole of the frontal edges 521, 531 in the same way as in this mode of embodiment.

The dimensional relationship of the upper surface 51 of the blocks 5 and the frontal side walls 52, 53 will be described next with the aid of fig. 2.

In this mode of embodiment, the angles T1 and T2 are formed between the upper surface 51 of the block 5 and the two frontal side walls 52, 53, as shown in fig. 2, as viewed in a cross section perpendicular to the axis of rotation of the tyre. The angles T1 and T2 are both less than 90° (not including 90°). Furthermore, the angles T1 and T2 are preferably both 85° or less, preferably both 70° or greater, and preferably both 60° or greater.

In the example shown in fig. 2, the abovementioned angles T1 and T2 are both the same at 70°.

Here, the angle T1 is measured by the angle between a straight line on the upper surface 51 joining one of the frontal edges 521 and the other frontal edge 531 in the tyre circumferential direction (the straight line seen in the cross section of fig. 2), and a straight line joining the frontal edge 521 on the front surface wall 52 and a position at a height 1.6 mm further inwards in the radial direction than the height of a tread wear indicator in a direction perpendicular to the frontal edge 521.

The angle T2 is likewise measured by the angle between a straight line on the upper surface 51 joining one of the frontal edges 521 and the other frontal edge 531 in the tyre circumferential direction (the straight line seen in the cross section of fig. 2), and a straight line joining the frontal edge 531 on the front surface wall 53 and a position at a height 1.6 mm further inwards in the radial direction than the height of a tread wear indicator in a direction perpendicular to the frontal edge 531.

It should be noted that, for example, if the frontal edges (521, 531) extend obliquely with respect to the direction of the axis of rotation of the tyre (if the auxiliary grooves 4 extend obliquely with respect to the direction of the axis of rotation of the tyre), a "line joining in the tyre circumferential direction" constitutes a "line joining in a direction perpendicular to the direction of extension of the frontal edges".

Furthermore, for example, the abovementioned mode of embodiment is also applicable if the frontal edges are formed on the block (5) in such a way that one or both of the frontal edges (521, 531) comprise (s) at least two sides, in which case a measurement is taken on a "line joining in the tyre circumferential direction" or on a "line joining in a direction perpendicular to the mean direction of extension of the frontal edges" in the same way as with the method described above, taking as a reference the mean direction of extension of the two sides on the upper surface (51).

Moreover, the tread wear indicator is a device for showing the tyre wear limit.

The action and effect afforded by the pneumatic tyre tread according to the abovementioned first mode of embodiment of the present invention will be described next.

When a vertical load is applied to the blocks (5) while the tyre is rolling, buckling deformation such as to reduce the edge pressure exerted on the frontal edges (521, 531), which is undesirable for improving the performance on snow, is produced on the blocks (5). This phenomenon is more pronounced when the tyre is travelling on a road surface for which the coefficient of friction is sufficient to cause deformation of the ground-contact elements, such as a snowy road surface, due to the drive force generated in the tyre direction of rotation or braking force.

In the light of this phenomenon, the reinforcing part 6 is provided over most of the region of the frontal side walls 52, 53 of the tread 1 according to this mode of embodiment, so it is possible to prevent the generation of buckling deformation of the blocks 5 on a snowy road surface, while it is also possible to generate high edge pressure at the frontal edges 521, 531, and as a result it is possible to improve the performance on snow.

At the same time, when the tyre is travelling on a road surface for which the coefficient of friction is insufficient to cause deformation of the ground-contact elements, such as an icy road surface, then if a drive force generated in the direction of rotation of the tyre or braking force is applied, there is a restriction on a high edge pressure being generated at the frontal edges 521, 531 even though the reinforcing part 6 is provided over most of the region of the frontal side wall 52, 53, as in this mode of embodiment. In addition, the angles T1 and T2 are formed in such a way as to be less than 90°, so when the tyre is travelling on a road surface for which the coefficient of friction is insufficient to cause deformation of the ground-contact elements, such as an icy road surface, a moment force acting in a direction producing a geometric reduction in the edge force at the frontal edge parts 521, 531 is generated on the blocks 5. Accordingly, with the tread 1 according to this mode of embodiment, it is possible to prevent the formation of a water film between the tread and the ice, which is well known as a cause of reducing the friction coefficient on ice, and as a result it is possible to improve the performance on ice.

A variant example of the pneumatic tyre tread according to the first mode of embodiment of the present invention will be described next.

The mean thickness t of the reinforcing part 6 is less than 2.0 mm, preferably 1.0 mm or less, and more preferably 0.5 mm or less. The mean thickness t of the reinforcing parts 6 may be different for the frontal side walls 52, 53 on the same block 5.

Furthermore, the reinforcing parts 6 provided in a region of at least equal to 70% of the frontal side walls 52, 53 as described above may be provided over different proportions of regions on the frontal side walls 52, 53 on the same block 5.

In addition to the abovementioned material based on natural resin (including rubber material) it is equally possible to use, as the material of the reinforcing part 6, a material in which fibers are mixed or impregnated with a material based on natural resin, thermoplastic resins, or lamination or mixture thereof. It is also possible to use the abovementioned materials in combination with a woven fabric or nonwoven fabric etc. impregnated with a material based on natural resin with the aim of improving adhesion with the blocks 5 or providing further reinforcement of the blocks 5. These fiber materials such as woven fabric or nonwoven fabric etc. impregnated with a material based on natural resin may be used alone as the reinforcing part 6. Furthermore, different materials may be used for the frontal side walls 52, 53 on the same block 5.

Furthermore, the bottom surface of the auxiliary grooves 4 is not covered by the reinforcing part 6 in this mode of embodiment, but it is equally possible to adopt an arrangement in which the edge part of the reinforcing part 6 on the inside of the tyre in the radial direction is extended so that the reinforcing part 6 covers part or all of the bottom surface of the grooves 3, 4, with the aim of improving producibility etc. when the reinforcing part 6 is provided.

Furthermore, the reinforcing parts 6 are provided only on the frontal side walls 52, 53 of the blocks facing the auxiliary grooves 4 in this mode of embodiment, but the reinforcing parts 6 may also be provided on the side walls (lateral side walls) 54, 55 of the blocks facing the circumferential main grooves 3 in the same way. This mainly makes it possible to improve the effect of performance on snow in the tyre width direction afforded by the reinforcing parts 6 provided on the lateral side walls 54, 55, and in particular makes it possible to improve the steering performance.

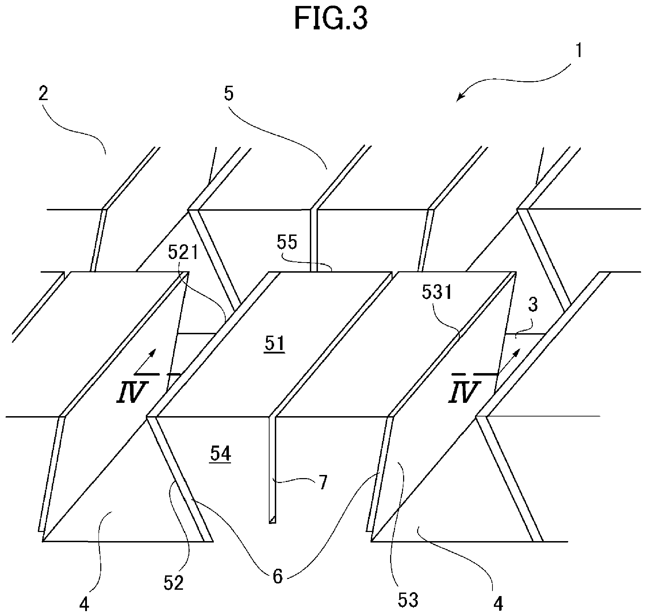

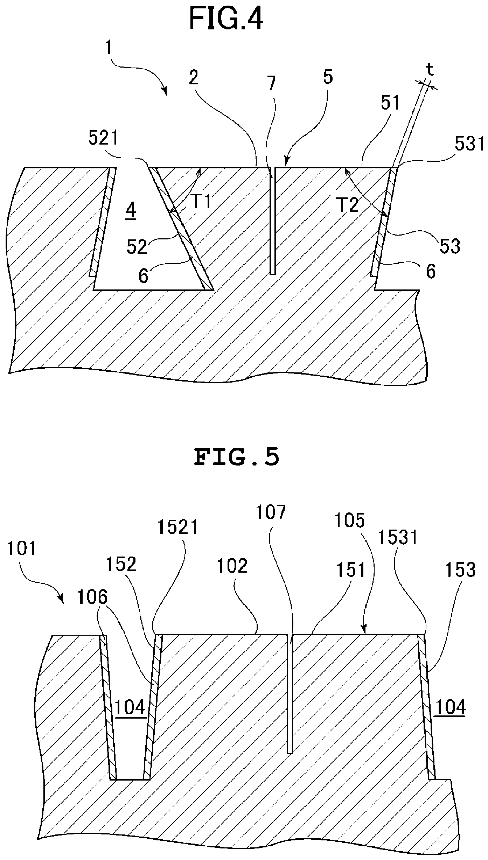

A pneumatic tyre tread according to the second mode of embodiment of the present invention will be described next with the aid of fig. 3 and 4. Fig. 3 is a perspective view schematically showing a pneumatic tyre tread according to the second mode of embodiment of the present invention; and fig. 4 is an enlargement in cross section of the block of the pneumatic tyre tread seen along the line IV-IV in fig. 3.

As shown in fig. 3, the tread 1 according to the second mode of embodiment comprises the contact surface 2 which comes into contact with the road surface when the tyre is rolling, and the two circumferential main grooves 3 and the plurality of auxiliary grooves 4 are formed therein in the same way as in the first mode of embodiment described above. The plurality of blocks 5 are defined by the circumferential main grooves and auxiliary grooves. The blocks 5 comprise: the upper surface 51 forming part of the contact surface 2; the two side walls (frontal side walls) 52, 53 which are separated in the longitudinal direction corresponding to the tyre circumferential direction; and the two side walls (lateral side walls) 54, 55 which are separated in the transverse direction corresponding to the tyre axial direction. The upper surface 51 intersects the frontal side walls 52, 53 and the frontal edges 521, 531 are formed at the intersections.

Furthermore, a narrow incision 7 which opens at the upper surface 51 and extends in the tyre width direction while also extending in the tyre radial direction (or essentially in the radial direction) is formed in the block 5 of the tread 1 according to the second mode of embodiment. The narrow incision 7 also opens at the lateral side walls 54, 55. It should be noted that the narrow incision 7 may extend over a predetermined angle with respect to the radial direction in a range such that various functions are exhibited. Here, the "tyre width direction" means a direction perpendicular to the tyre circumferential direction in this mode of embodiment, but also includes a direction extending obliquely through a predetermined angle with respect to the tyre circumferential direction. The reinforcing parts 6 are provided on the two frontal side walls 52, 53.

According to this mode of embodiment, the reinforcing parts 6 are provided in such a way as to face the auxiliary grooves 4 over a region of at least equal to 70% and preferably at least equal to 90% of the frontal side walls 52, 53. Furthermore, the mean thickness t of the reinforcing parts 6 (see fig. 4) is provided in such a way as to be less than 2.0 mm and preferably less than 1.0 mm. The frontal side walls 52, 53, on which the reinforcing parts 6 are provided, are provided in such a way that the distance between the position at the outermost side of the reinforcing parts 6 measured in the radial direction and the frontal edges 521, 531 is less than or equal to 2.0 mm. In the example shown in fig. 3, a reinforcing part 6 is provided over the whole region, i.e. a region of 100%, of one of the frontal side walls 52, and is provided over a region of 90% of the other frontal side wall 53. The mean thickness t thereof is 0.7 mm on one of the frontal side walls 52 and 0.5 mm on the other frontal side wall 53.

The frontal edges 521, 531 are formed on the upper surface 51 of the blocks 5 in the same way as in the first mode of embodiment described above, and the range of the circumferential region of the upper surface 51 is restricted by the two circumferential edges (frontal edges) 521, 531 in the tyre circumferential direction. That is to say, the upper surface 51 comprises the two circumferential edges 521, 531 at the edge parts thereof on the tyre circumferential direction side.

According to this mode of embodiment, as shown in fig. 4, the blocks 5 are formed in the same way as in the first mode of embodiment, in such a way that the angles T1 and T2 are formed between the upper surface 51 of the blocks 5 and the two frontal side walls 52, 53, when viewed in a cross section perpendicular to the axis of rotation of the tyre. The angles T1 and T2 can be measured as the angles which are formed by a "straight line joining the two frontal edges 521, 531" and a straight line joining "the frontal edge 521 or 531, and a point on the frontal side walls 52, 53 which is 1.6 mm further inwards in the radial direction than the height of a tread wear indicator".

In this mode of embodiment, the angles T1 and T2 are both less than 90° (not including 90°) and formed in such a way as to be different from each other. In the example shown in fig. 4, the angle T1 is 65° and the angle T2 is 80°.

According to this mode of embodiment, the angles T1 and T2 are thus different from each other, the angle T2 preferably being greater than the angle T1. Furthermore, the angle T1 is preferably 80° or less and the angle T2 is preferably between 75° and 85°.

Furthermore, the angles T1 and T2 preferably satisfy the following relationship:

$$T_2 \geq T_1 + 5° .$$

It should be noted that the symbol "°" denotes the units of the angle, namely "degrees".

The action and effect afforded by the pneumatic tyre tread according to the abovementioned second mode of embodiment of the present invention will be described next.

According to this mode of embodiment, the angles T1 and T2 formed by the upper surface 51 and the frontal side walls 52, 53 have different angles, the angle T2 being greater than the angle T1. As a result, according to the second mode of embodiment, in addition to the action and effect of the first mode of embodiment described above, it is possible, for example, to reduce the moment force in a direction which produces a reduction in the contact surface area of the block 5 generated in the vicinity of the frontal edge 521 when the frontal edge 521 on the angle T2 side, which is a relatively larger angle, constitutes the trailing-side frontal edge while the tyre is rolling, and therefore it is possible to increase the contact surface area of the block 5. As a result, when the tyre is travelling on a road surface for which the coefficient of friction is sufficiently high to cause deformation of the block 5, such as a snowy road surface, it is possible to achieve a locally high edge pressure at the frontal edge 521 of the block 5 due to the effect of the reinforcing part 6, while at the same time, when the tyre is travelling on a road surface for which the coefficient of friction is insufficient to cause deformation of the block 5, such as an icy road surface, it is possible to increase the contact surface area of the upper surface 51 of the block 5, so the performance on ice and performance on snow can be improved more effectively.

For this reason, the angles T1 and T2 formed by the upper surface 51 and the frontal side walls 52, 53 are preferably such that the side which is intended as the trailing-side frontal edge has a larger angle.

Preferred modes of embodiment of the present invention have been described above, but the present invention is not limited to the modes of embodiment shown in the figures and a number of variant modes may be implemented within the scope of the appended claims.

Moreover, fig. 5 is an enlargement in cross section schematically showing the block of a conventional pneumatic tyre tread. A block 105 of this conventional pneumatic tyre tread 101 comprises an upper surface 151 forming part of a contact surface 102, and frontal edges 1521, 1531 are formed at the intersections of frontal side walls 152, 153. A narrow incision 107 which opens at the upper surface 151 and extends transversely and radially inside the tyre is formed in the block 105. Reinforcing parts 106 are provided on the two frontal side walls 152, 153 in such a way as to include the whole of the frontal edges 1521, 1531. The mean thickness t of the reinforcing parts 106 is 0.5 mm, and the reinforcing parts 106 are provided in such a way as to face auxiliary grooves 104 over a region of 84% of the frontal side walls 152, 153.

[Exemplary Embodiments]

The results of tests carried out using a simulation (finite element method) employing commercially-available computer software will be described next in order to clarify the advantage of the present invention, the tests involving blocks of a pneumatic tyre tread according to a conventional example provided with reinforcing parts having a known form, and blocks of three types of pneumatic tyre tread according to exemplary embodiments of the present invention.

Exemplary Embodiment 1 relates to a block model provided with the reinforcing parts according to the first mode of embodiment, and Exemplary Embodiments 2 and 3 relate to block models provided with the reinforcing parts according to the second mode of embodiment, the angle formed between the upper surface of the blocks and the frontal side walls being a combination of three different values.

The four types of block model size in the conventional example and the exemplary embodiments were in each case a cuboid block having a short side of length 10 mm, a long side of length 20 mm and a height of 10 mm, formed using the same rubber-based material (elastic modulus 5.4 MPa), the narrow incisions each having a width of 0.4 mm and depth of 7 mm and opening at the upper surface of the block. The reinforcing parts were formed from the same material (elastic modulus 270 MPa) and the reinforcing parts were provided over the whole region of the frontal side walls with a mean thickness of 0.5 mm, and the elastic modulus of the material of the reinforcing parts was 50 times the elastic modulus of the rubber-based material of the blocks.

With suitable loading applied to the block models set in this way, the maximum ground-contact pressure generated by the ground-contact elements under road surface conditions corresponding to a snowy road surface, and the coefficient of friction under road surface conditions corresponding to an icy road surface were obtained. The calculation results are shown in table 1. In table 1, the calculated values are shown as an index taking the conventional example as 100, and higher numerical values are more favourable.

[Table 1]

| | Exemplary Embodiment 1 | Exemplary Embodiment 2 | Exemplary Embodiment 3 | Conventional Example |
|---|---|---|---|---|
| Angle T1 (degrees) | 80 | 80 | 70 | 90 |
| Angle T2 (degrees) | 80 | 85 | 85 | 90 |
| Maximum ground-contact pressure on snow (index) | 175 | 174 | 187 | 100 |
| Coefficient of friction on ice (index) | 102 | 104 | 105 | 100 |

As shown in table 1, it can be confirmed that the pneumatic tyre treads according to Exemplary Embodiments 1 to 3 made it possible to effectively achieve improved performance on snow and performance on ice.

[Key to Symbols]

| | |
|---|---|
| 1 | Pneumatic tyre tread |
| 2 | Contact surface |
| 3 | Circumferential main groove |
| 4 | Auxiliary groove |
| 5 | Block |
| 51 | Block upper surface (part of which includes the contact surface 2) |
| 52, 53 | Side wall on circumferential direction side, frontal side wall |
| 521, 531 | Frontal edge |
| 54, 55 | Side wall on tyre width direction side, side surface side wall |
| 6 | Reinforcing part |
| 7 | Narrow incision (sipe) |

**Claims**

1. Pneumatic tyre tread (1) formed by means of at least one rubber composition, the at least one rubber composition has an elastic modulus Et;
the tread (1) comprises: at least one circumferential main groove (3), a plurality of auxiliary grooves (4), and a plurality of blocks (5) which are defined by the circumferential main groove (3) and the auxiliary grooves (4);
at least one of the blocks (5) from among the plurality of blocks (5) comprises: an upper surface (51) constituting a contact surface (2) at least partly in contact with a road surface when the tyre is rolling, two frontal side walls (52, 53) positioned along the tyre circumferential direction, and two lateral side walls (54, 55) positioned along the tyre axial direction;
the upper surface (51) of the block (5) has two frontal edges (521, 531) formed at positions intersecting the two frontal side walls (52, 53); the two frontal side walls (52, 53) are formed in such a way that the angles thereof with respect to the upper surface (51) form angles T1 and T2, respectively, the angles T1 and T2 are both less than 90°, **characterized in that**:

   the block (5) has a reinforcing part (6) provided on at least one of the two frontal side walls (52, 53); the reinforcing part (6) is formed by means of a material having an elastic modulus Ef, and the elastic modulus Ef of the reinforcing part (6) and the elastic modulus Et of the rubber composition have values obtained from the tensile test defined in the standard ASTM D882-09, and the elastic modulus Ef of the reinforcing part (6) is at least 20 times greater than the elastic modulus Et of the rubber composition;
   the reinforcing part (6) of the block (5) has a mean thickness of between 0.1 mm and 2.0 mm, and is provided in such a way as to face at least the auxiliary groove (4) over a region of at least equal to 70% of the frontal side wall (52, 53).

2. Pneumatic tyre tread (1) according to Claim 1, in which the angles T1 and T2 are both 85° or less.

3. Pneumatic tyre tread (1) according to Claim 1 or 2, in which the angles T1 and T2 are both 60° or greater.

4. Pneumatic tyre tread (1) according to Claim 3, in which the angles T1 and T2 are both 70° or greater.

5. Pneumatic tyre tread (1) according to any one of Claims 1 to 4, in which the angles T1 and T2 are different from each other.

6. Pneumatic tyre tread (1) according to any one of Claims 1 to 5, in which the angle T2 is greater than the angle T1.

7. Pneumatic tyre tread (1) according to Claim 6, in which the angles T1 and T2 satisfy the following relationship:

$$T_2 \geq T_1 + 5° \ .$$

8. Pneumatic tyre tread (1) according to any one of Claims 1 to 7, in which the angle T1 is 80° or less.

9. Pneumatic tyre tread (1) according to any one of Claims 1 to 8, in which the angle T2 is between 75° and 85°.

10. Pneumatic tyre tread (1) according to any one of Claims 1 to 9, in which the reinforcing part (6) provided on the frontal side wall (52, 53) is provided in such a way as to extend at least partly in the width direction of the frontal edge (521, 531).

11. Pneumatic tyre tread (1) according to any one of Claims 1 to 10, in which the reinforcing part (6) is provided over a region of at least equal to 90% of the at least one frontal side wall (52, 53).

12. Pneumatic tyre tread (1) according to Claim 11, in which the reinforcing part (6) is provided over the whole region of the at least one frontal side wall (52, 53).

13. Pneumatic tyre tread (1) according to Claim 12, in which the reinforcing part is provided over the whole region of the two frontal side walls (52, 53).

14. Pneumatic tyre **characterized in that** it comprises the tread (1) according to any one of Claims 1 to 13.

**Patentansprüche**

1. Luftreifen-Lauffläche (1), die mittels mindestens einer Kautschukzusammensetzung gebildet wird,
   wobei die mindestens eine Kautschukzusammensetzung einen Elastizitätsmodul Et aufweist;
   wobei die Lauffläche (1) Folgendes aufweist: mindestens eine umlaufende Hauptrille (3), mehrere Hilfsrillen (4) und mehrere Blöcke (5), die durch die umlaufende Hauptrille (3) und die Hilfsrillen (4) definiert sind;
   wobei mindestens einer der Blöcke (5) der mehreren Blöcke (5) Folgendes aufweist: eine obere Oberfläche (51), die eine Aufstandsfläche (2) bildet, die mindestens teilweise in Kontakt mit einem Straßenbelag ist, wenn der Reifen rollt, zwei vordere Seitenwände (52, 53), die entlang der Reifenumfangsrichtung positioniert sind, und zwei seitliche Seitenwände (54, 55), die entlang der Reifenaxialrichtung positioniert sind;
   die obere Oberfläche (51) des Blocks (5) zwei Stirnkanten (521, 531) aufweist, die an Positionen ausgebildet sind, die die zwei vorderen Seitenwände (52, 53) schneiden;
   die zwei vorderen Seitenwände (52, 53) derart gestaltet sind, dass deren Winkel in Bezug auf die obere Oberfläche (51) jeweils die Winkel T1 und T2 bilden, wobei die Winkel T1 und T2 jeweils kleiner sind als 90°, **dadurch gekennzeichnet, dass**:

   der Block (5) ein Verstärkungsteil (6) aufweist, das an mindestens einer der zwei vorderen Seitenwände (52, 53) bereitgestellt ist;
   das Verstärkungsteil (6) aus einem Material mit einem Elastizitätsmodul Ef gebildet ist, und der Elastizitätsmodul Ef des Verstärkungsteils (6) und der Elastizitätsmodul Et der Kautschukzusammensetzung Werte aufweisen, die bei dem im Standard ASTM D882-09 definierten Zugversuch erhalten worden sind, und der Elastizitätsmodul Ef des Verstärkungsteils (6) mindestens 20-mal größer als der Elastizitätsmodul Et der Kautschukzusammensetzung;

das Verstärkungsteil (6) des Blocks (5) eine mittlere Dicke von zwischen 0,1 mm und 2,0 mm aufweist und bereitgestellt ist, um mindestens der Hilfsrille (4) über einen Bereich von mindestens gleich 70 % der vorderen Seitenwand (52, 53) gegenüber zu liegen.

**2.** Luftreifen-Lauffläche (1) nach Anspruch 1, wobei die Winkel T1 und T2 jeweils 85° oder weniger betragen.

**3.** Luftreifen-Lauffläche (1) nach Anspruch 1 oder 2, wobei die Winkel T1 und T2 jeweils 60° oder mehr betragen.

**4.** Luftreifen-Lauffläche (1) nach Anspruch 3, wobei die Winkel T1 und T2 jeweils 70° oder mehr betragen.

**5.** Luftreifen-Lauffläche (1) nach einem der Ansprüche 1 bis 4, wobei sich die Winkel T1 und T2 voneinander unterscheiden.

**6.** Luftreifen-Lauffläche (1) nach einem der Ansprüche 1 bis 5, wobei der Winkel T2 größer ist als der Winkel T1.

**7.** Luftreifen-Lauffläche (1) nach Anspruch 6, wobei die Winkel T1 und T2 die folgende Beziehung erfüllen:

$$T_2 \geq T_1 + 5°.$$

**8.** Luftreifen-Lauffläche (1) nach einem der Ansprüche 1 bis 7, wobei der Winkel T1 80° oder weniger beträgt.

**9.** Luftreifen-Lauffläche (1) nach einem der Ansprüche 1 bis 8, wobei der Winkel T2 zwischen 75° und 85° beträgt.

**10.** Luftreifen-Lauffläche (1) nach einem der Ansprüche 1 bis 9, wobei das auf der vorderen Seitenwand (52, 53) bereitgestellte Verstärkungsteil (6) auf solche Weise bereitgestellt ist, dass es sich mindestens teilweise in der Breitenrichtung der vorderen Kante (521, 531) erstreckt.

**11.** Luftreifen-Lauffläche (1) nach einem der Ansprüche 1 bis 9, wobei das Verstärkungsteil (6) über einen Bereich von mindestens 90 % der mindestens einen vorderen Seitenwand (52, 53) bereitgestellt ist.

**12.** Luftreifen-Lauffläche (1) nach Anspruch 11, wobei das Verstärkungsteil (6) über den gesamten Bereich der mindestens einen vorderen Seitenwand (52, 53) bereitgestellt ist.

**13.** Luftreifen-Lauffläche (1) nach Anspruch 12, wobei das Verstärkungsteil über den gesamten Bereich der zwei vorderen Seitenwände (52, 53) bereitgestellt ist.

**14.** Luftreifen, **dadurch gekennzeichnet, dass** er die Lauffläche (1) nach einem der Ansprüche 1 bis 13 aufweist.


**Revendications**

**1.** Bande de roulement (1) de pneu formée au moyen d'au moins une composition de caoutchouc :

la au moins une composition de caoutchouc a un module d'élasticité Et ;
la bande de roulement (1) comprend : au moins une rainure principale circonférentielle (3), une pluralité de rainures auxiliaires (4) et une pluralité de blocs (5) qui sont définis par la rainure principale circonférentielle (3) et les rainures auxiliaires (4) ;
au moins l'un des blocs (5) parmi la pluralité de blocs (5) comprend : une surface supérieure (51) constituant une surface de contact (2) au moins partiellement en contact avec une surface de route lorsque le pneu roule, deux parois latérales frontales (52, 53) positionnées le long de la direction circonférentielle du pneu, et deux parois latérales de côté (54, 55) positionnées le long de la direction axiale du pneu ;
la surface supérieure (51) du bloc (5) a deux bords frontaux (521, 531) formés dans des positions coupant les deux parois latérales frontales (52, 53) ;
les deux parois latérales frontales (52, 53) sont formées de sorte que leurs angles par rapport à la surface supérieure (51) forment des angles T1 et T2 respectivement, les angles T1 et T2 sont tous deux inférieurs à 90°, **caractérisé en ce que** :

le bloc (5) a une partie de renforcement (6) prévue sur au moins l'une des deux parois latérales frontales (52, 53) ;

la partie de renforcement (6) est formée au moyen d'un matériau ayant un module d'élasticité Ef, et le module d'élasticité Ef de la partie de renforcement (6) et le module d'élasticité Et de la composition de caoutchouc ont des valeurs obtenues à partir de l'essai à la traction défini dans la norme ASTM D882-09, et le module d'élasticité Ef de la partie de renforcement (6) est au moins 20 fois supérieur au module d'élasticité Et de la composition de caoutchouc ;

la partie de renforcement (6) du bloc (5) a une épaisseur moyenne comprise entre 0,1 mm et 2,0 mm et est prévue afin de faire face au moins à la rainure auxiliaire (4) sur une région au moins égale à 70 % de la paroi latérale frontale (52, 53).

2. Bande de roulement (1) de pneu selon la revendication 1, dans laquelle les angles T1 et T2 sont tous deux de 85° ou inférieurs.

3. Bande de roulement (1) de pneu selon la revendication 1 ou 2, dans laquelle les angles T1 et T2 sont tous deux de 60° ou supérieurs.

4. Bande de roulement (1) de pneu selon la revendication 3, dans laquelle les angles T1 et T2 sont tous deux de 70° ou supérieurs.

5. Bande de roulement (1) de pneu selon l'une quelconque des revendications 1 à 4, dans laquelle les angles T1 et T2 sont différents l'un de l'autre.

6. Bande de roulement (1) de pneu selon l'une quelconque des revendications 1 à 5, dans laquelle l'angle T2 est supérieur à l'angle T1.

7. Bande de roulement (1) de pneu selon la revendication 6, dans laquelle les angles T1 et T2 satisfont la relation suivante :

$$T_2 \geq T_1 + 5°.$$

8. Bande de roulement (1) de pneu selon l'une quelconque des revendications 1 à 7, dans laquelle l'angle T1 est de 80° ou inférieur.

9. Bande de roulement (1) de pneu selon l'une quelconque des revendications 1 à 8, dans laquelle l'angle T2 est compris entre 75° et 85°.

10. Bande de roulement (1) de pneu selon l'une quelconque des revendications 1 à 9, dans laquelle la partie de renforcement (6) prévue sur la paroi latérale frontale (52, 53) est prévue afin de s'étendre au moins partiellement dans le sens de la largeur du bord frontal (521, 531).

11. Bande de roulement (1) de pneu selon l'une quelconque des revendications 1 à 10, dans laquelle la partie de renforcement (6) est prévue sur une région au moins égale à 90 % de la au moins une paroi latérale frontale (52, 53).

12. Bande de roulement (1) de pneu selon la revendication 11, dans laquelle la partie de renforcement (6) est prévue sur toute la région de la au moins une paroi latérale frontale (52, 53).

13. Bande de roulement (1) de pneu selon la revendication 12, dans laquelle la partie de renforcement est prévue sur toute la région des deux parois latérales frontales (52, 53).

14. Pneu **caractérisé en ce qu'**il comprend la bande de roulement (1) selon l'une quelconque des revendications 1 à 13.

# FIG.1

# FIG.2

# FIG.3

# FIG.4

# FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7047814 A
- JP 2010105509 A
- JP 2011079188 W
- WO 2013088570 A
- JP 2009292229 A
- JP 62268708 A

**Non-patent literature cited in the description**

- POLYMER PHYSICS. 296